# EUROPÄISCHE PATENTSCHRIFT

(11) **EP 1 272 364 B1**
(45) Veröffentlichungstag und Bekanntmachung des Hinweises auf die Patenterteilung: **04.10.2006**
(21) Anmeldenummer: 01936130.2
(22) Anmeldetag: 22.03.2001
(51) Int. Cl.: B60C 9/20

(54) **GÜRTEL MIT VERSTÄRKUNGSELEMENTEN FÜR EINEN FAHRZEUGLUFTREIFEN SOWIE FAHRZEUGLUFTREIFEN**
BRACING PLY COMPRISING REINFORCING ELEMENTS FOR A VEHICLE PNEUMATIC TIRE, AND VEHICLE PNEUMATIC TIRE
CARCASSE RADIALE A ELEMENTS RENFOR ATEURS POUR PNEUMATIQUE DE VEHICULE ET PNEUMATIQUE DE VEHICULE

(30) Priorität: 31.03.2000 DE 10016202
(43) Veröffentlichungstag der Anmeldung: 08.01.2003
(73) Patentinhaber: Continental Aktiengesellschaft, 30165 Hannover (DE)
(72) Erfinder: FISCHER, Stefan, 30459 Hannover (DE); ELSNER, Wolfgang, 30826 Garbsen (DE); BILLING, Hans-Martin, 30161 Hannover (DE); KIESE, Peter, 30982 Pattensen (DE)
(86) Internationale Anmeldenummer: PCT/EP2001/003296
(87) Internationale Veröffentlichungsnummer: WO 2001/074608

(56) Entgegenhaltungen:
- EP-A- 0 430 851
- US-A- 4 293 019
- PATENT ABSTRACTS OF JAPAN vol. 014, no. 420 (M-1023), 11. September 1990 (1990-09-11) & JP 02 164603 A (BRIDGESTONE CORP), 25. Juni 1990 (1990-06-25)

## Beschreibung

Die Erfindung betrifft Gürtel mit aus Stahlcorden bestehenden Verstärkungselementen für einen Luftreifen für Transporter oder Leicht-LKW und verstärkte (Reinforced) Luftreifen, gemäß dem Oberbegriff des Anspruches 1

Ein gattungsgemäßer Gürtel ist aus EP-A-0 430 851 bekannt.

Die Erfindung betrifft ferner einen Fahrzeugluftreifen für Transporter oder Leicht-LKW oder einen verstärkten (Reinforced) Fahrzeugluftreifen für PKW, der mit einer solchen Gürtelkonstruktion versehen ist, gemäß dem Oberbegriff des Anspruches 8.

Fahrzeugluftreifen für Leicht-LKW oder Transporter, üblicherweise und international als "Commercial Tires" (C-Tire) bezeichnet, sowie Fahrzeugluftreifen für Vielzweckfahrzeuge, für Van's und für mit hoher Zuladungskapazität ausgestattete PKW, zum Beispiel für Kombi-Fahrzeuge, solche Reifen werden üblicherweise als "Reinforced Tires" (R) bezeichnet, sind regelmäßig höheren Belastungen ausgesetzt und speziell dafür konstruktiv angepasst.

Diese Anpassung auf eine höhere Belastbarkeit erfolgt sowohl bei den "Commercial Tires" als auch bei den "Reinforced Tires" durch konstruktive Maßnahmen, die entweder auf eine Verstärkung der Karkasse, der Wulstbereiche oder des Gürtelpaketes zielen. Hierbei können beispielsweise Karkasslagen höherer Festigkeit oder mehrere Karkasslagen normaler Festigkeit eingesetzt werden. Ebenso können im Wulstbereich Wulstverstärkungen, d.h. Verstärkungsmaterialien in Form von Geweben oder elastomeren Zwischenlagen vorgesehen sein. Gleichermaßen kann das Gürtelpaket durch eine spezielle Ausbildung der Gürtellagen, das sind die in aller Regel aus Stahlcorden bestehenden Cordlagen innerhalb des elastomeren Gürtelmateriales, durch Änderung der Cordabstände, durch andere Cordmaterialien, beispielsweise solche höherer Festigkeit, auf die hohen Belastungen ausgelegt werden. Dabei hat natürlich die Ausbildung des Gürtelpaketes mit den größten Einfluß auf die Auslegung des jeweiligen Reifens auf hohe Belastbarkeit.

Reifen solcher Konstruktion sind z.B. im "ETRTO-Standards-Manual" (European Tire and Rim Technical Organization) in verschiedene Belastungsstufen (Load Ranges) eingeteilt, etwa in die Load Ranges B, C, D und E, die dort auch noch mit den früher verwendeten und durch "Ply Ratings" (PR) gekennzeichneten Festigkeitsklassen korreliert sind. Diese Bezeichnung resultiert im Übrigen noch daher, dass zuvor und mit den ehemals verwendeten textilen Gewebelagen die Erhöhung der Festigkeit nur durch ein Vervielfachen solcher Lagen möglich war.

Demzufolge entspricht die heutige "Load Range B" etwa der ehemaligen Klassifizierung 4PR, die "Load Range C" etwa 6PR, die "Load Range D" etwa 8PR und die "Load Range E" etwa 10PR. Die PR-Zahl bestimmt hierbei übrigens auch den jeweils nötigen Nennluftdruck.

Mit diesen Klasseneinteilungen kann dann im Wesentlichen abhängig von der Reifengröße und -abmessung ein Lastindex (LI) angegeben werden, d.h. eine Tragfähigkeitskennzahl, die dann wieder die maximal zulässige Belastung in Kilogramm pro Einzelreifen kennzeichnet.

Einen großen Einfluß auf die Belastbarkeit und damit auf die genannte Einteilung in Belastungsklassen haben natürlich die Zugfestigkeiten der Stahlcorde im Gürtel, wobei üblicherweise die Stahlcorde eingeteilt werden in solche mit hoher Zugfestigkeit, nämlich "High Tensile" (HT) - Corde, in solche mit normaler Zugfestigkeit "Normal Tensile" (NT) und auch gelegentlich in solche mit besonders hoher Zugfestigkeit "Super Tensile" (ST). Hierbei weisen beispielsweise die "HT-Corde" eine Mindestzugfestigkeit von 850 N und die "NT-Corde" eine Mindestzugfestigkeit von 745 N auf.

Ein Gürtel bzw. ein Reifen der eingangs genannten Art ist aus der EP-A-0 430 851 bekannt. Diese Druckschrift befasst sich mit Radialluftreifen der Belastungsstufen C und D mit einem insbesondere zweilagig ausgeführten Gürtel, dessen Stahlkorde eine 2+2 ― Konstruktion aufweisen, wobei der Filammentdurchmesser 0,30 mm beträgt.

Die US 5.242.001 zeigt einen Radialluftreifen der Belastungsstufe E (Load Range E) mit einem im Wesentlichen der Laufstreifenbreite entsprechenden Gürtel, der zwei Lagen von im Elastomermaterial des Gürtels eingebundenen Stahlcorden aufweist, wobei die Corde ebenfalls in U + T-Konstruktion ausgeführt sind. In diesem Radialluftreifen werden jedoch die relativ teuren "ST-Corde" eingesetzt und somit im Wesentlichen durch einen Materialaustausch die Anpassung auf die hohe Belastungsstufe durchgeführt.

Die Bereitstellung solcher Luftreifen, nämlich der "Commercial Tires" und der "Reinforced Tires" gemäß den oben genannten Belastungsstufen ist bisher jedoch mit einigen nicht zu übersehenden Nachteilen in der Herstellung und im Handling verbunden. Zum einen wird nämlich die Fertigung durch das zusätzliche Einbringen von Verstärkungsmaterial und durch zusätzliche Fertigungsschritte in ihrer Wirtschaftlichkeit beeinflusst und zum anderen ergeben sich durch das entstehende höhere Gewicht des Reifens eine Erhöhung der Materialkosten und auch ein höherer Rollwiderstand, so dass letztlich auch die Verbrauchskosten des damit ausgerüsteten Kraftfahrzeuges steigen. Der ausschließliche Einsatz leichterer Corde mit niedrigeren Festigkeiten kann das Gewichtsproblem beispielsweise auch nicht lösen, da dann entweder die Anzahl der Corde oder aber der Durchmesser, d.h. das Volumen der Corde, im Verhältnis zum umgebenden Elastomermaterial erhöht werden muss. Diese Erhöhung beispielsweise des Corddurchmessers stößt aber an geometrische Grenzen bei der Verwendung mehrer Cordlagen und bringt Probleme im Hinblick auf das erforderliche Einbringen des Elastomermaterials bzw. Gummis zwischen die Corde und die einzelnen Filamente.

Für die Erfindung bestand also die Aufgabe, eine Gürtelkonstruktion bzw. einen Fahrzeugluftreifen mit einer Gürtelkonstruktion bereitzustellen, der ein geringes Gewicht bei hoher Gürtelfestigkeit aufweist, der eine erhöhte Wirtschaftlichkeit bei der Fertigung und eine einfache Konstruktion zulässt, dessen Masse möglichst gering gehalten wird und der im Bereich der Gürtelgummierung mit möglichst wenig Material herhergestellt werden kann und ohne Abstriche in den genannten Belastungsklassen einsetzbar ist.

Gelöst wird die Aufgabe durch die Merkmale des Hauptanspruchs. Weitere vorteilhafte Ausbildungen sind in den Unteransprüchen enthalten. Ebenfalls gelöst wird diese Aufgabe durch die Merkmale des Anspruchs 6, wobei auch hier vorteilhafte Ausbildungen durch die Merkmale der hierzu abhängigen Ansprüche dargestellt werden.

Hierbei ist die radial innere Stahlcordlage des Gürtels in Axialrichtung des Reifens breiter ausgebildet als die radial äußere Stahlcordlage. Die einzelnen Stahlcorde einer Lage sind parallel zueinander angeordnet und verlaufen in einer Steigung von 18° bis 25° zur Zenitebene des Reifens geneigt, wobei die Stahlcorde der radial inneren und der radial äußeren Stahlcordlage eine engegengesetzte Steigung aufweisen und aus Einzelfilamenten mit einem Filamentdurchmesser von 0,32 mm bestehen. Die Stahlcorde sind dabei aus zwei Gruppen von Filamenten in einer "U + T" Konstruktion (Untwisted + Twisted) aufgebaut, deren erste Gruppe aus zwei ungeschlagenen und parallelen Filamenten, vorzugsweise aus zwei mit einer großen Schlaglänge SL von ≥ 100 mm geschlagenen und im wesentlichen parallelen Filamenten besteht, und deren zweite Gruppe aus zwei geschlagenen Filamenten mit einer Schlaglänge SL von 12 bis 18 mm, vorzugsweise 16 mm besteht, wobei die erste und die zweite Gruppe mit einer Schlaglänge SL von 12 bis 18 mm, vorzugsweise 16 mm zur Bildung des jeweiligen Cordes umeinandergeschlagen (verlitzt) sind, und wobei der radiale Abstand der Stahlcordlagen in der Zenitebene des Reifens geringer ist als in den Schulterbereichen.

An dieser Stelle wird darauf verwiesen, dass es grundsätzlich bekannt ist, beispielsweise aus EP-A-0 710 576, die beiden Gürtellagen eines zweilagig ausgeführten Gürtels eines Fahrezeugreifens derart anzuordnen, dass der radiale Abstand der Stahlkordlagen in der Zenitebene des Reifens geringer ist als in den Schulterbereichen.

Die Art des Schlages sowohl der Filamente untereinander als auch der Cordgruppen untereinander kann sowohl als "S-Schlag" oder als "Z-Schlag" ausgeführt werden, so dass also beispielsweise die zweite Filamentgruppe mit einer Schlaglänge von 16 mm im "S-Schlag" und die beiden Gruppen um einander im "Z-Schlag" geschlagen werden.

Die Verwendung einer solchen "U + T-Konstruktion" in den genannten Schlaglängen führt zu einem hervorragenden Eindringen des Elastomermaterials/des Gummi zwischen die Corde und auch zwischen die Filamente, d.h. in die Corde hinein, was die gewünschte hohe Adhäsion zwischen Gummi und Stahlcord bewirkt und den Einschluss von Luftblasen verhindert.

Der so entstandene Cord wird üblicherweise "2 + 2 x 32 U+T" bezeichnet.

In Kombination der Einzelmerkmale führt eine solche Konstruktion zu einem hochbelastbaren Fahrzeugluftreifen mit einem Gewicht, das um ca. 250 - 500 g pro Reifen leichter ist als herkömmliche Fahrzeugluftreifen vergleichbarer Belastungsstufen.

Ebenso ergibt sich eine erhöhte Wirtschaftlichkeit bei der Fertigung durch die äußerst einfache und kostengünstige "2 + 2 -Konstruktion" und es wird darüber hinaus eine relativ dünne Gummierung im Gürtelbereich auf Grund der kleinen Corddurchmesser bei den verwendeten Filamentdurchmessern von 0,32 mm ermöglicht. Bei dem Filamentdurchmesser handelt es sich natürlich um den Nenndurchmesser, der aufgrund von Fertigungstoleranzen innerhalb eine Schwankungsbreite von +/- 5 % variieren kann. Üblicherweise beziehen sich darüberhinaus sämtliche Abmessungs- und Festigkeitsangaben auf den Zustand im Ursprungsmaterial, welcher durch die weitere Verarbeitung zum fertigen Reifen - wenn auch in sehr geringem Umfang - noch Änderungen unterworfen ist.

Natürlich läßt sich eine solche Reifenkonstruktion durch übliche Maßnahmen vervollständigen, beispielsweise durch eine Gürtelbandage mit Verstärkungslagen aus Nylon, Polyester oder Aramid, die in 1 bis 3 Lagen je nach Ausführung um den Gürtel gelegt oder auch gespult werden kann.

Insbesondere in einer vorteilhaften Ausführung, bei der der radiale Abstand der Stahlcordlagen des Gürtels in der Zenitebene des Reifens 0,30 - 0,85 mm und in den Schulterbereichen 1,20 - 2,40 mm beträgt und bei der die radial innere Stahlcordlage des Gürtels in Axialrichtung des Reifens 10 -15 mm breiter ausgebildet ist als die radial äußere Stahlcordlage, erreicht man, dass die auf die Lauffläche des Reifens wirkende Last gewissermaßen "gestaffelt" in die Seitenbereiche des Reifens eingeleitet wird und damit die wärmekritischen Schulterbereiche, an denen sich bekannterweise zuerst Ablösungserscheinungen bilden könnten, sich in den genannten hohen Belastungsstufen völlig unkritisch verhalten.

Ein weiterer Vorteil ergibt sich dadurch, dass die einzelnen und zueinander parallel angeordneten Gürtel-Stahlcorde einer Lage einen Abstand von 0,45 - 1,65 mm zueinander aufweisen und dass die Anzahl der Stahlcorde pro Dezimeter einer Stahlcordlage - normal zum Cordverlauf gemessen - zwischen 40 und 75 liegt. Durch eine solche Konstruktion ist die Belastbarkeit des Reifens als solche erhöht, ohne zusätzliches Gewicht in die Reifenkonstruktion einzubringen.

Vorteilhafterweise beträgt die Zugfestigkeit der Stahlcorde im Vormaterial und vor der Vulkanisierung zum fertigen Reifen 805 N. Der hierbei verwendete Cord gehört somit zu dem "Normal Tensile"-Bereich und ist im Wesentlichen für die Belastungsklasse (Load Range) B vorgesehen.

Eine andere vorteilhafte Ausführung besteht darin, dass die Zugfähigkeit der Stahlcord im Vormaterial und vor der Vulkanisierung zum fertigen Reifen 910 N beträgt, so dass hiermit problemlos die Belastungsklassen (Load Ranges) C und D abgedeckt werden können.

So weist ein erfindungsgemäßer "Load Range C" Luftreifen der Größe 205/65 R15 C Stahlcorde mit Zugfestigkeiten von 910 N auf (High Tensile). Bei diesem Reifen beträgt der radiale Abstand der Stahlcordlagen in der Zenitebene 0,5 mm und im Schulterbereich 2 mm. Die einzelnen und zueinander parallel angeordneten Stahlcorde einer Lage weisen dabei einen Abstand von 1,0 mm auf. Bei einer Beaufschlagung eines solchen Reifens mit dem der Belastungsklasse PR 6 (Ply Rating) entsprechenden Nennluftdruck von 3,5 - 3,75 bar ergibt sich als Belastungskennzahl ein Lastindex (LI) von 102/100, was eine Maximalbelastung von 850 kg pro Reifen bei Einfachbereifung und von 800 kg pro Reifen bei Zwillingsbereifung ergibt.

Als weiteres Beispiel für einen erfindungsgemäßen "Load Range D" Reifen mit HT-Corden, d.h.von Corden mit einer Zugfestigkeit von 910 N lässt sich die Größe 185 R14 C aufführen, bei der ebenfalls der radiale Abstand der Stahlcordlagen in der Zenitebene des Reifens 0,5 mm und in den Schulterbereichen 2 mm beträgt und bei dem die einzelnen und zueinander parallel angeordneten Stahlcorde einer Lage einen Abstand von 1 mm besitzen. Mit dem der Belastungsklasse 8 PR angemessenen Nennluftdruck von 4,50 - 4,75 bar ergibt sich auch hier eine Tragfähigkeitskennzahl, ausgedrückt durch den Lastindex (LI) von 102 bzw. 100 bei Zwillingsbereifung, was einer Maximalbelastung von 850 bzw. 800 kg pro Reifen entspricht.

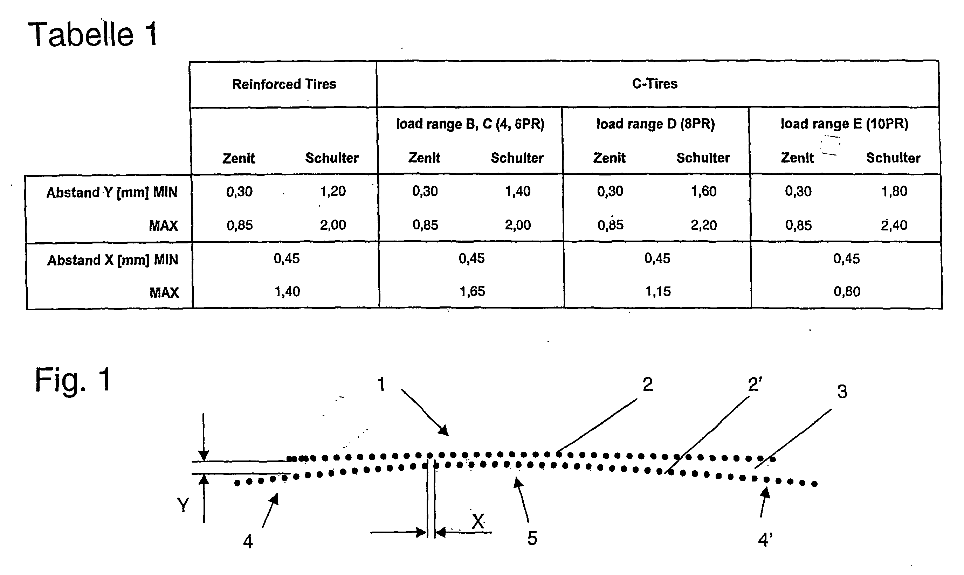

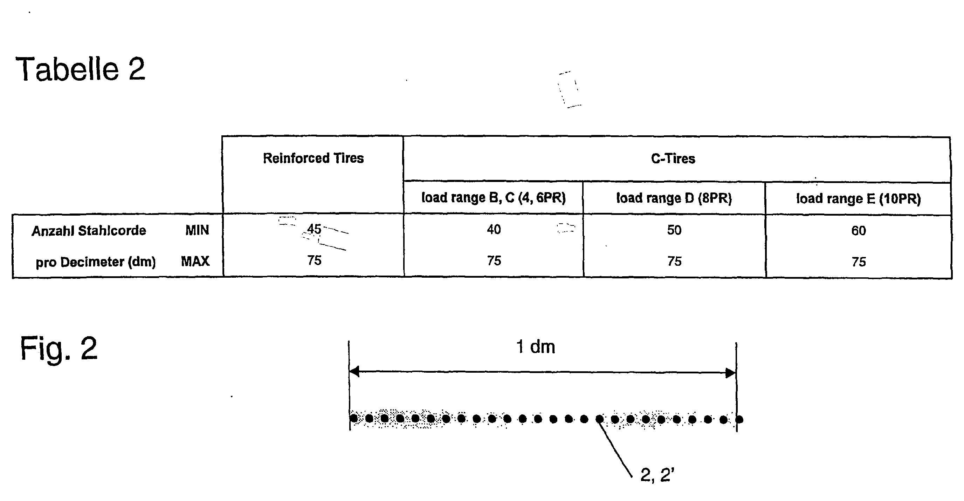

Die Figuren 1 und 2 zeigen neben den ihnen entsprechend zugeordneten Tabellen 1 und 2 noch einmal die Ausbildung des erfindungsgemäßen Gürtels bzw. des entsprechenden Fahrzeugluftreifens mit einem solchen Gürtel.

Hierbei sind in der Tabelle 1 die unterschiedlichen radialen Abstände (Y) der Stahlcordlagen in der Zenitebene und in den Schulterbereichen, abhängig von den unterschiedlichen Belastungsklassen (Load Ranges), sowie der Abstand (X) der einzelnen und zueinander parallel angeordneten Stahlcorde einer Lage im Gürtel, ebenfalls abhängigvon den Belastungsklassen (Load Ranges), aufgeführt.

Die Fig. 1 verdeutlicht dies anhand einer Prinzipskizze und zeigt einen Gürtel 1 (Gürtelpaket), welcher aus Stahlcordlagen 2 und 2' besteht, die im Elastomermaterial 3 des Gürtels als Verstärkungselemente eingebunden sind. Die radial innere Stahlcordlage 2' ist dabei in Axialrichtung des Reifens, d.h über die Reifenbreite, deutlich breiter ausgebildet ist als die radial äußere Stahlcordlage 2. Ebenfalls ist hier erkennbar, daß der radiale Abstand der Stahlcordlagen 2 und 2' in der Zenitebene 5 des Reifens geringer ist als in den Schulterbereichen 4 und 4'.

Die Tabelle 2 zeigt für die Stahlcordgürtellagen 2 und 2' die Anzahl der Stahlcorde pro Dezimeter normal zum Cordverlauf gemessen und abhängig von den Belastungsklassen (Load Ranges). Die Darstellung gilt hierbei sowohl für die obere als auch für die untere Stahlcordgürtellage. Fig. 2 verdeutlicht diese Ausbildung noch einmal als Prinzipskizze.

## Patentansprüche

1. Gürtel mit aus Stahlcorden bestehenden Verstärkungselementen für einen Fahrzeugluftreifen, insbesondere für einen Luftreifen für Transporter oder Leicht-LKW und verstärkte (Reinforced) Luftreifen, wobei der Fahrzeugluftreifen im wesentlichen aus einem mit einem Laufstreifenprofil versehenen Laufstreifen, zwei Seitenwänden, einer mit Karkassenlagen und ggf. mit Verstärkungselementen versehene Karkasse, einem aus Gürtellagen und ggf. einer ein- oder mehrteiligen Gürtelbandage und weiteren Einlagen bestehenden Gürtel (1), sowie aus zwei mit Wulstkernen versehenen Reifenwülsten besteht, wobei der Gürtel aus einem mit zwei in radialer Richtung übereinander angeordneten Stahlcordlagen (Gürtellagen 2, 2') verstärktem Elastomermaterial (3) besteht, und wobei die radial innere Stahlcordlage (2') in Axialrichtung des Reifens breiter ausgebildet ist als die radial äußere Stahlcordlage (2), wobei die einzelnen Stahlcorde einer Lage parallel zueinander angeordnet und in einer Steigung von 18° bis 25° zur Zenitebene des Reifens geneigt verlaufen, wobei die Anzahl der Stahlcorde pro Decimeter einer Stahlcordlage - normal zum Cordverlauf gemessen - zwischen 40 und 75 liegt wobei die Stahlcorde der radial inneren und der radial äußeren Stahlcordlage eine engegengesetzte Steigung aufweisen, und wobei die Stahlcorde aus zwei Gruppen von Filamenten in einer "U + T" Konstruktion (Untwisted + Twisted) aufgebaut sind, deren erste Gruppe aus zwei ungeschlagenen und parallelen Filamenten, vorzugsweise aus zwei mit einer großen Schlaglänge SL von ≥ 100 mm geschlagenen und im wesentlichen parallelen Filamenten besteht, und deren zweite Gruppe aus zwei geschlagenen Filamenten mit einer Schlaglänge SL von 12 bis 18 mm, vorzugsweise 16 mm besteht, wobei die erste und die zweite Gruppe mit einer Schlaglänge SL von 12 bis 18 mm, vorzugsweise 16 mm umeinandergeschlagen (verlitzt) sind, **dadurch gekennzeichnet, dass** die Stahlcorde aus Einzelfilamenten mit einem Filamentdurchmesser von 0.32 mm bestehen, dass der radiale Abstand der Stahlcordlagen in der Zenitebene (5) des Reifens geringer ist als in den Schulterbereichen (4, 4'), dass die radial innere Stahlcordlage in Axialrichtung des Reifens 10 bis 15 mm breiter ausgebildet ist als die radial äußere Stahlcordlage.

2. Gürtel nach Anspruch 1, **dadurch gekennzeichnet, dass** der radiale Abstand der Stahlcordlagen in der Zenitebene des Reifens 0,30 bis 0,85 mm und in den Schulterbereichen 1,20 bis 2,40 mm beträgt.

3. Gürtel nach Anspruch 1 oder 2, **dadurch gekennzeichnet, dass** die einzelnen und zueinander parallel angeordneten Stahlcorde einer Lage einen Abstand von 0,45 bis 1,65 mm zueinander aufweisen.

4. Gürtel nach Anspruch 1 bis 3, **dadurch gekennzeichnet, dass** die Zugfestigkeit der Stahlcorde im Vormaterial und vor der Vulkanisierung zum fertigen Reifen 805 N beträgt.

5. Gürtel nach Anspruch 1 bis 4, **dadurch gekennzeichnet, dass** die Zugfestigkeit der Stahlcorde im Vormaterial und vor der Vulkanisierung zum fertigen Reifen 910 N beträgt.

6. Fahrzeugluftreifen für Transporter oder Leicht-LKW oder verstärkter (Reinforced) Fahrzeugluftreifen für PKW, wobei der Fahrzeugluftreifen im wesentlichen aus einem mit einem Laufstreifenprofil versehenen Laufstreifen, zwei Seitenwänden, einer mit Karkassenlagen und ggf. mit Verstärkungselementen versehene Karkasse, einem aus Gürtellagen und ggf. einer ein- oder mehrteiligen Gürtelbandage und weiteren Einlagen bestehenden Gürtel (1), sowie aus zwei mit Wulstkemen versehenen Reifenwülsten besteht, wobei der Gürtel (1) aus einem mit zwei in radialer Richtung übereinander angeordneten Stahlcordlagen (Gürtellagen 2, 2') verstärktem Elastomermaterial (3) besteht, und wobei die radial innere Stahlcordlage (2') in Axialrichtung des Reifens breiter ausgebildet ist als die radial äußere Stahlcordlage (2), wobei die einzelnen Stahlcorde einer Lage parallel zueinander angeordnet und in einer Steigung von 18° bis 25° zur Zenitebene des Reifens geneigt verlaufen, wobei die Anzahl der Stahlcorde pro Decimeter einer Stahlcordlage ― normal zum Cordverlauf gemessen ― zwischen 40 und 75 liegt wobei die Stahlcorde der radial inneren und der radial äußeren Stahlcordlage eine engegengesetzte Steigung aufweisen und aus Einzelfilamenten mit einem Filamentdurchmesser von 0,32 mm bestehen, und wobei die Stahlcorde aus zwei Gruppen von Filamenten in einer "U + T" Konstruktion (Untwisted + Twisted) aufgebaut sind, deren erste Gruppe aus zwei ungeschlagenen und parallelen Filamenten, bzw. aus zwei mit einer großen Schlaglänge SL von vorzugsweise ≥ 100 mm geschlagenen und im wesentlichen parallelen Filamenten besteht, und deren zweite Gruppe aus zwei geschlagenen Filamenten mit einer Schlaglänge SL von 12 bis 18 mm, vorzugsweise 16 mm besteht, wobei die erste und die zweite Gruppe mit einer Schlaglänge SL von 12 bis 18 mm, vorzugsweise 16 mm umeinandergeschlagen (verlitzt) sind, **dadurch gekennzeichnet, dass** die Stahlcorde aus Einzelfilamenten mit einem Filamentdurchmesser von 0.32 mm bestehen, dass der radiale Abstand der Stahlcordlagen in der Zenitebene (5) des Reifens geringer ist als in den Schulterbereichen (4), dass die radial innere Stahlcordlage in Axialrichtung des Reifens 10 bis 15 mm breiter ausgebildet ist als die radial äußere Stahlcordlage.

7. Fahrzeugluftreifen nach Anspruch 6, **dadurch gekennzeichnet, dass** der radiale Abstand der Stahlcordlagen des Gürtels in der Zenitebene des Reifens 0,30 bis 0,85 mm und in den Schulterbereichen 1,20 bis 2,40 mm beträgt.

8. Fahrzeugluftreifen nach Anspruch 6 bis 7, **dadurch gekennzeichnet, dass** im Gürtel die einzelnen und zueinander parallel angeordneten Stahlcorde einer Lage einen Abstand von 0,45 bis 1,65 mm zueinander aufweisen.

9. Fahrzeugluftreifen nach Anspruch 6 bis 8, **dadurch gekennzeichnet, dass** die Zugfestigkeit der Stahlcorde des Gürtels im Vormaterial und vor der Vulkanisierung zum fertigen Reifen 805 N beträgt

10. Fahrzeugluftreifen nach Anspruch 6 bis 9, **dadurch gekennzeichnet, dass** die Zugfestigkeit der Stahlcorde des Gürtels im Vormaterial und vor der Vulkanisierung zum fertigen Reifen 910 N beträgt.

## Claims

1. Breaker belt with reinforcing elements comprising steel cords for a pneumatic vehicle tyre, in particular for a pneumatic tyre for transporters or lightweight trucks, and strengthened (reinforced) pneumatic tyres, the pneumatic vehicle tyre substantially comprising a tread strip with a tread strip profile, two sidewalls, a carcass provided with carcass plies and, optionally, with reinforcing elements, a breaker belt (1) comprising breaker belt plies and, optionally, a one-part or multi-part breaker belt bandage and further inserts, as well as two tyre beads provided with bead cores, the breaker belt consisting of elastomeric material (3) reinforced with two steel cord plies (breaker belt plies 2 and 2') arranged one over the other in the radial direction, the radially inner steel cord ply (2') being made wider in the axial direction of the tyre than the radially outer steel cord ply (2), the individual steel cords of a ply being arranged parallel to one another and extending at an inclination of 18° to 25° in relation to the zenith plane of the tyre, the number of steel cords per decimetre of a steel cord ply - measured perpendicularly to the extent of the cord - lying between 40 and 75, the steel cords of the radially inner and the radially outer steel cord ply having an opposite inclination, and the steel cords being made up of two groups of filaments in a "U + T" (Untwisted + Twisted) configuration, the first group of which comprises two untwisted and parallel filaments, preferably two filaments twisted with a large length of lay SL of ≥ 100 mm and having substantially parallel filaments, and the second group of which comprises two twisted filaments with a length of lay SL of 12 to 18 mm, preferably 16 mm, the first and second groups being twisted around one another (braided) with a length of lay SL of 12 to 18 mm, preferably 16 mm, **characterized in that** the steel cords comprise individual filaments with a filament diameter of 0.32 mm, **in that** the radial spacing of the steel cord plies in the zenith plane (5) of the tyre is less than in the shoulder areas (4, 4'), and **in that** the radially inner steel cord ply is made 10 to 15 mm wider in the axial direction of the tyre than the radially outer steel cord ply.

2. Breaker belt according to Claim 1, **characterized in that** the radial spacing of the steel cord plies in the zenith plane of the tyre is 0.30 to 0.85 mm and in the shoulder areas is 1.20 to 2.40 mm.

3. Breaker belt according to Claim 1 or 2, **characterized in that** the individual steel cords of a ply, arranged parallel to one another, have a spacing of 0.45 to 1.65 mm from one another.

4. Breaker belt according to Claims 1 to 3, **characterized in that** the tensile strength of the steel cords in the uncured material and before the vulcanization of the finished tyre is 805 N.

5. Breaker belt according to Claims 1 to 4, **characterized in that** the tensile strength of the steel cords in the uncured material and before the vulcanization of the finished tyre is 910 N.

6. Pneumatic vehicle tyre for transporters or light weight trucks or strengthened (reinforced) pneumatic vehicle tyre for passenger cars, the pneumatic vehicle tyre substantially comprising a tread strip with a tread strip profile, two sidewalls, a carcass provided with carcass plies and, optionally, with reinforcing elements, a breaker belt (1) comprising breaker belt plies and, optionally, a one-part or multi-part breaker belt bandage and further inserts, as well as two tyre beads provided with bead cores, the breaker belt (1) consisting of elastomeric material (3) reinforced with two steel cord plies (breaker belt plies 2 and 2') arranged one over the other in the radial direction, the radially inner steel cord ply (2') being made wider in the axial direction of the tyre than the radially outer steel cord ply (2), the individual steel cords of a ply being arranged parallel to one another and extending at an inclination of 18° to 25° in relation to the zenith plane of the tyre, the number of steel cords per decimetre of a steel cord ply - measured perpendicularly to the extent of the cord - lying between 40 and 75, the steel cords of the radially inner and the radially outer steel cord ply having an opposite inclination and comprising individual filaments with a filament diameter of 0.32 mm, and the steel cords being made up of two groups of filaments in a "U + T" (Untwisted + Twisted) configuration, the first group of which comprises two untwisted and parallel filaments, or two filaments twisted with a large length of lay SL of preferably ≥ 100 mm and having substantially parallel filaments, and the second group of which comprises two twisted filaments with a length of lay SL of 12 to 18 mm, preferably 16 mm, the first and second groups being twisted around one another (braided) with a length of lay SL of 12 to 18 mm, preferably 16 mm, **characterized in that** the steel cords comprise individual filaments with a filament diameter of 0.32 mm, **in that** the radial spacing of the steel cord plies in the zenith plane (5) of the tyre is less than in the shoulder areas (4), and **in that** the radially inner steel cord ply is made 10 to 15 mm wider in the axial direction of the tyre than the radially outer steel cord ply.

7. Pneumatic vehicle tyre according to Claim 6, **characterized in that** the radial spacing of the steel cord plies of the breaker belt in the zenith plane of the tyre is 0.30 to 0.85 mm and in the shoulder areas is 1.20 to 2.40 mm.

8. Pneumatic vehicle tyre according to Claim 6 or 7, **characterized in that** in the breaker belt the individual steel cords of a ply, arranged parallel to one another, have a spacing of 0.45 to 1.65 mm from one another.

9. Pneumatic vehicle tyre according to Claims 6 to 8, **characterized in that** the tensile strength of the steel cords of the breaker belt in the uncured material and before the vulcanization of the finished tyre is 805 N.

10. Pneumatic vehicle tyre according to Claims 6 to 9, **characterized in that** the tensile strength of the steel cords of the breaker belt in the uncured material and before the vulcanization of the finished tyre is 910 N.

## Revendications

1. Ceinture avec des éléments de renforcement constitués de câbles d'acier pour un pneumatique de véhicule, notamment pour un pneumatique pour véhicules de transport ou camions légers et pneumatiques renforcés (reinforced), le pneumatique du véhicule se composant essentiellement d'une bande de roulement pourvue d'un profil de bande de roulement, de deux parois latérales, d'une carcasse pourvue de couches de carcasse et éventuellement d'éléments de renforcement, d'une ceinture (1) constituée de couches de ceinture et éventuellement d'un bandage de ceinture en une ou plusieurs parties et d'autres inserts, ainsi que de deux talons de pneumatique pourvus de tringles, la ceinture se composant d'un matériau élastomère (3) renforcé avec deux couches de câbles d'acier (couches de ceinture 2, 2') disposées l'une au-dessus de l'autre dans la direction radiale, et la couche de câbles d'acier radialement interne (2') étant plus large dans la direction axiale du pneumatique que la couche de câbles d'acier radialement externe (2), les câbles d'acier individuels d'une couche étant disposés parallèlement les uns aux autres et s'étendant de manière inclinée suivant une pente de 18° à 25° par rapport au plan du zénith du pneumatique, le nombre des câbles d'acier par décimètre d'une couche de câbles d'acier, mesuré perpendiculairement à l'étendue des câbles, valant entre 40 et 75, les câbles d'acier de la couche de câbles d'acier radialement interne et radialement externe présentant une pente opposée, et les câbles d'acier étant constitués de deux groupes de filaments dans une construction en "U + T" (Untwisted + Twisted, non tordue et tordue), dont le premier groupe se compose de deux filaments non tordus et parallèles, de préférence de deux filaments tordus avec un grand tour SL ≥ 100 mm et essentiellement parallèles, et dont le deuxième groupe se compose de deux filaments tordus ayant un tour SL de 12 à 18 mm, de préférence de 16 mm, le premier et le deuxième groupe étant torsadés l'un autour de l'autre avec un tour SL de 12 à 18 mm, de préférence de 16 mm (toronnés), **caractérisée en ce que** les câbles d'acier se composent de filaments individuels ayant un diamètre de filament de 0,32 mm, **en ce que** la distance radiale entre les couches de câbles d'acier dans le plan du zénith (5) du pneumatique est inférieure à celle dans les régions d'épaulement (4, 4') et **en ce que** la couche de câbles d'acier radialement interne, dans la direction axiale du pneumatique, est 10 à 15 mm plus large que la couche de câbles d'acier radialement externe.

2. Ceinture selon la revendication 1, **caractérisée en ce que** la distance radiale entre les couches de câbles d'acier dans le plan du zénith du pneumatique est de 0,30 à 0,85 et de 1,20 à 2,40 mm dans les régions des épaulements.

3. Ceinture selon la revendication 1 ou 2, **caractérisée en ce que** les câbles d'acier individuels et parallèles entre eux d'une couche présentent un espacement de 0,45 à 1,65 mm les uns des autres.

4. Ceinture selon les revendications 1 à 3, **caractérisée en ce que** la résistance à la traction des câbles d'acier dans le matériau brut et avant la vulcanisation pour fournir le pneumatique fini vaut 805 N.

5. Ceinture selon les revendications 1 à 4, **caractérisée en ce que** la résistance à la traction des câbles d'acier dans le matériau brut et avant la vulcanisation pour fournir le pneumatique fini vaut 910 N.

6. Pneumatique de véhicule pour véhicules de transport ou camions léger ou pneumatique de véhicule renforcé (reinforced) pour véhicules légers, dans lequel le pneumatique de véhicule se compose essentiellement d'une bande de roulement pourvue d'un profil de bande de roulement, de deux parois latérales, d'une carcasse pourvue de couches de carcasse et éventuellement d'éléments de renforcement, d'une ceinture (1) constituée de couches de ceinture et éventuellement d'un bandage de ceinture en une ou plusieurs parties et d'autres inserts, ainsi que de deux talons de pneumatique pourvus de tringles, la ceinture (1) se composant d'un matériau élastomère (3) renforcé avec deux couches de câbles d'acier (couches de ceinture 2, 2') disposées l'une au-dessus de l'autre dans la direction radiale, et la couche de câbles d'acier radialement interne (2') étant plus large dans la direction axiale du pneumatique que la couche de câbles d'acier radialement externe (2), les câbles d'acier individuels d'une couche étant disposés parallèlement les uns aux autres et s'étendant de manière inclinée suivant une pente de 18° à 25° par rapport au plan du zénith du pneumatique, le nombre des câbles d'acier par décimètre d'une couche de câbles d'acier, mesuré perpendiculairement à l'étendue des câbles, valant entre 40 et 75, les câbles d'acier de la couche de câbles d'acier radialement interne et radialement externe présentant une pente opposée et étant constitués de filaments individuels ayant un diamètre de filament de 0,32 mm, et les câbles d'acier étant constitués de deux groupes de filaments dans une construction en "U + T" (Untwisted + Twisted, non tordue et tordue), dont le premier groupe se compose de deux filaments non tordus et parallèles, ou de deux filaments tordus avec un grand tour SL de préférence ≥ 100 mm et essentiellement parallèles, et dont le deuxième groupe se compose de deux filaments tordus ayant un tour SL de 12 à 18 mm, de préférence de 16 mm, le premier et le deuxième groupe étant torsadés l'un autour de l'autre avec un tour SL de 12 à 18 mm, de préférence de 16 mm (toronnés), **caractérisé en ce que** les câbles d'acier se composent de filaments individuels ayant un diamètre de filament de 0,32 mm, **en ce que** la distance radiale entre les couches de câbles d'acier dans le plan du zénith (5) du pneumatique est inférieure à celle dans les régions d'épaulement (4), et **en ce que** la couche de câbles d'acier radialement interne, dans la direction axiale du pneumatique, est 10 à 15 mm plus large que la couche de câbles d'acier radialement externe.

7. Pneumatique de véhicule selon la revendication 6, **caractérisé en ce que** la distance radiale entre les couches de câbles d'acier dans le plan du zénith du pneumatique est de 0,30 à 0,85 et de 1,20 à 2,40 mm dans les régions des épaulements.

8. Pneumatique de véhicule selon les revendications 6 à 7, **caractérisé en ce que** les câbles d'acier individuels et parallèles entre eux d'une couche présentent un espacement de 0,45 à 1,65 mm les uns des autres dans la ceinture.

9. Pneumatique de véhicule selon les revendications 6 à 8, **caractérisé en ce que** la résistance à la traction des câbles d'acier de la ceinture dans le matériau brut et avant la vulcanisation pour fournir le pneumatique fini vaut 805 N.

10. Pneumatique de véhicule selon les revendications 6 à 9, **caractérisé en ce que** la résistance à la traction des câbles d'acier de la ceinture dans le matériau brut et avant la vulcanisation pour fournir le pneumatique fini vaut 910 N.
